# EUROPEAN PATENT APPLICATION

(11) **EP 3 467 335 A1**
(43) Date of publication of application: **10.04.2019**
(21) Application number: 17806535.5
(22) Date of filing: 25.05.2017
(51) Int. Cl.: F16F 7/00, A43B 17/14, A43B 21/32, B29C 67/00, B33Y 30/00

(54) **THREE-DIMENSIONAL STRUCTURE**

(30) Priority: 03.06.2016 JP 2016111817
(71) Applicant: Sumitomo Rubber Industries Ltd., Kobe-shi, Hyogo 651-0072 (JP)
(72) Inventor: YOSHINAGA, Hisao, Kobe-shi Hyogo 651-0072 (JP); AKASAKA, Takuro, Kobe-shi Hyogo 651-0072 (JP)
(74) Representative: Manitz Finsterwald Patent- und Rechtsanwaltspartnerschaft mbB
(86) International application number: PCT/JP2017/019625
(87) International publication number: WO 2017/208979

(57) **Abstract**

A three-dimensional structure according to the present invention is a three-dimensional structure defined by X, Y, and Z directions, including: a body portion in which a plurality of through holes extending in the X direction are disposed in alignment in at least one of the Y and Z directions; and a partition portion that is provided in at least one of the through holes and that partitions the through hole in at least one location in an axial direction of the through hole, wherein the three-dimensional structure is formed by a rubber composition.

## Description

### Technical Field

The present invention relates to a three-dimensional structure, a shoe, and a method for producing a three-dimensional structure.

### Background Art

In recent years, three-dimensional additive manufacturing apparatuses (so-called, 3D printers) that manufacture a three-dimensional structure by laying down successively and curing material such as a resin based on design data of the three-dimensional structure have been put into practical use. As such three-dimensional additive manufacturing apparatuses, those employing many various methods such as an inkjet method, a method involving curing a photo-curable resin by laser light irradiation, and a method involving fused deposition modeling of an ABS resin or the like are known.

In the inkjet method, for example, a three-dimensional structure is produced by discharging fine droplets of a photo-curable liquid resin composition from a nozzle so as to render a predetermined shape pattern, irradiating the pattern with ultraviolet rays to form a cured thin layer, and repeating this process to achieve lamination. In the fused deposition modeling method, for example, a three-dimensional structure is produced by heating and melting a solid ABS resin or the like, dropping the melted resin from a nozzle to render a predetermined shape pattern, reducing the fluidity by cooling, and repeating this process to achieve lamination.

### Citation List

### Patent Literature

Patent Literature 1: JP 2015-168135A

### Summary of Invention

### Technical Problem

Meanwhile, as three-dimensional structures produced by the above-described three-dimensional additive manufacturing apparatuses, those made of a resin are generally known. On the other hand, a rubber has a low compression set and a low temperature dependence of the modulus of elasticity as compared with a resin. For this reason, if a three-dimensional structure (three-dimensional structural body) made of a rubber can be produced, it can be expected to be used for applications different from those of a three-dimensional structure made of a resin or a metal.

When the above-described three-dimensional structure is formed using a rubber, it is conceivable that the three-dimensional structure can be used as a cushion member such as a buffer material by being formed in a mesh configuration. However, the cushioning properties of the structure cannot be adjusted easily, and there has been a need for a three-dimensional structure that allows such adjustment to be performed in a simple manner. The present invention enables the adjustment of the cushioning properties to be performed easily. It is also an object thereof to provide a three-dimensional structure, a shoe, and a method for producing a three-dimensional structure.

### Solution to Problem

A first three-dimensional structure according to the present invention is a three-dimensional structure defined by X, Y, and Z directions, including: a body portion in which a plurality of through holes extending in the X direction are disposed in alignment in at least one of the Y and Z directions; and a partition portion that is provided in at least one of the through holes and that partitions the through hole in at least one location in an axial direction of the through hole, wherein the three-dimensional structure is formed by a rubber composition.

In the above-described three-dimensional structure, the partition portion may be provided in a plurality of the through holes, and the partition portions provided in adjacent ones of the through holes may be provided so as to be adjacent to each other.

In the above-described three-dimensional structure, the partition portions may be provided in a plurality of locations in an axial direction of a plurality of the through holes, and the partition portions provided in adjacent ones of the through holes may be provided so as to be adjacent to each other.

In the above-described three-dimensional structure, intervals between the plurality of partition portions provided in the through holes may be uniform.

In the above-described three-dimensional structure, intervals between a plurality of partition portions provided in the through holes may be different.

In each of the above-described three-dimensional structures, a cross section of each of the through holes may be formed in a polygonal shape.

A second three-dimensional structure according to the present invention is a three-dimensional structure defined by X, Y, and Z directions, including: a body portion in which a plurality of shaft members extending in the X direction are disposed in alignment in at least one of the Y and Z directions; and a coupling portion disposed so as to couple any of locations in a clearance between the plurality of shaft members, wherein the three-dimensional structure is formed by a rubber composition.

In each of the above-described three-dimensional structures, the rubber composition may further include a co-cross-linking agent.

In each of the above-described three-dimensional structures, the rubber composition may further include a vulcanized rubber.

In each of the above-described three-dimensional structures, the rubber composition may further include a filler.

In each of the above-described three-dimensional structures, the rubber composition may further include a polyrotaxane capable of being chemically bonded to the liquid rubber.

A rubber molded body according to the present invention is a cured material of the above-described rubber composition, wherein the liquid rubber and the polyrotaxane form a chemical bond in the cured material.

A shoe according to the present invention includes a sole portion or an insole that is formed at least partially by any one of the above-described three-dimensional structures.

A first method for producing a three-dimensional structure according to the present invention is a method for producing a three-dimensional structure defined by X, Y, and Z directions, including: a first step of discharging a rubber composition containing a liquid rubber from a nozzle, while moving the nozzle in the X direction, to form a linear first line, wherein a plurality of the first lines are formed at intervals in the Y direction, and are stacked in the Z direction, thereby forming a three-dimensional body portion having a plurality of through holes extending in the X direction; and a second step of forming, in the first step, a linear second line while moving the nozzle in the Y direction, wherein the second line is stacked in the Z direction, thereby forming, in at least one of the through holes, a partition portion that partitions an internal space of the through hole, wherein the first and second steps include, after discharging the rubber composition to form each of the first and second lines, a step of curing the first and second lines.

Note that "curing" in the above-described method includes, in addition to a complete cured state, a semi-cured state or a state leading to a complete cured state. The same applies to a second method for producing a three-dimensional structure.

In the above-described method for producing the three-dimensional structure, in a location where the first line and the second line intersect, the second line may be formed by discharging the rubber composition from the nozzle, with the nozzle being brought into proximity to the first line.

A second method for producing a three-dimensional structure according to the present invention is a method for producing a three-dimensional structure defined by X, Y, and Z directions, including: a step of discharging a rubber composition containing a liquid rubber from a nozzle, while laying down successively the rubber composition in the X direction, to form a plurality of shaft members extending in the X direction; and a second step of forming, in the first step, a coupling portion that couples at least a part of adjacent shaft members, while moving the nozzle in the Y direction or the Z direction, wherein the first and second steps include, after discharging the rubber composition, a step of curing the rubber composition.

### Advantageous Effects of Invention

According to the present invention, it is possible to easily adjust cushioning properties.

### Brief Description of Drawings

FIG. 1 is a perspective view showing an embodiment of a three-dimensional structure according to the present invention;
FIG. 2 is a front view of FIG. 1;
FIG. 3 is a cross-sectional view taken along the line A-A in FIG. 2;
FIG. 4 is a front view of a production apparatus of the three-dimensional structure shown in FIG. 1;
FIG. 5 is a plan view showing a production process of the three-dimensional structure;
FIG. 6 is a plan view showing the production process of the three-dimensional structure;
FIG. 7 is a front view showing the production process of the three-dimensional structure;
FIG. 8 is a plan view showing the production process of the three-dimensional structure;
FIG. 9 is a cross-sectional view showing the production process of the three-dimensional structure.
FIG. 10 is a cross-sectional view showing the production process of the three-dimensional structure;
FIG. 11 is a cross-sectional view showing the production process of the three-dimensional structure.
FIG. 12A is a cross-sectional view showing another example of the production process of the three-dimensional structure;
FIG. 12B is a plan view showing another example of the production process of the three-dimensional structure.
FIG. 13 is a front view of another three-dimensional structure according to the present invention.
FIG. 14 is a front view of another three-dimensional structure according to the present invention.
FIG. 15A is a perspective view of another three-dimensional structure according to the present invention;
FIG. 15B is a cross-sectional view taken along a plane S of a three-dimensional structural body according to FIG. 15A;
FIG. 16 is a cross-sectional view of another three-dimensional structure according to the present invention;
FIG. 17 is a cross-sectional view showing another three-dimensional structure according to the present invention;
FIG. 18 is a cross-sectional view of another three-dimensional structure according to the present invention;
FIG. 19A is a perspective view showing another three-dimensional structure according to the present invention;
FIG. 19B is a side view of the three-dimensional structure according to FIG. 19A;
FIG. 20 is a side view of another three-dimensional structure according to the present invention;
FIG. 21 is a perspective view showing a production step of another three-dimensional structure according to FIG. 19;
FIG. 22 is a plan view of a sole portion of a shoe in which the three-dimensional structure according to the present invention is disposed; and
FIG. 23 is a vertical cross-sectional view of a shoe in which a three-dimensional structure according to the present invention is disposed.

### Description of Embodiments

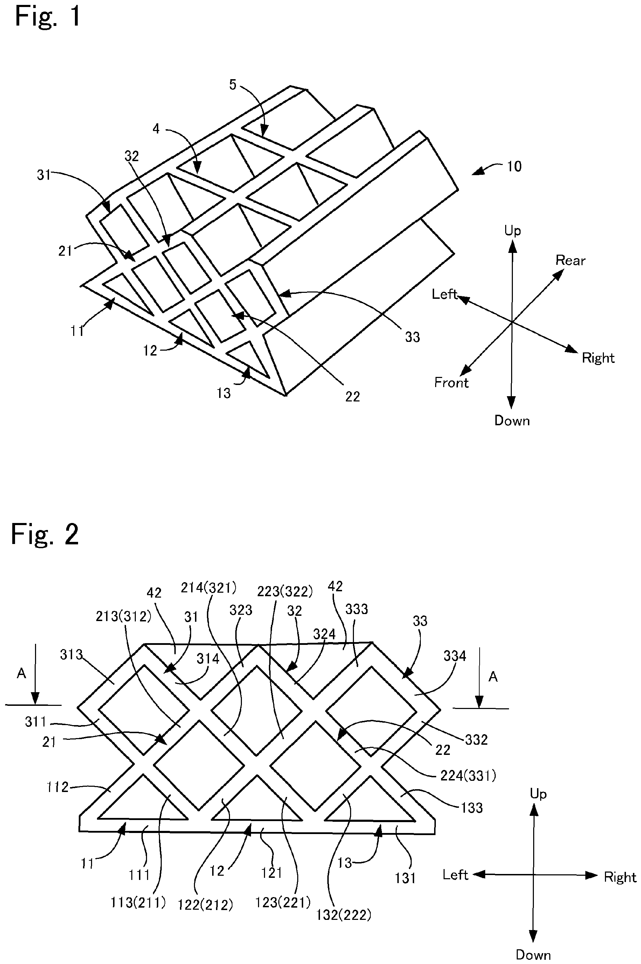

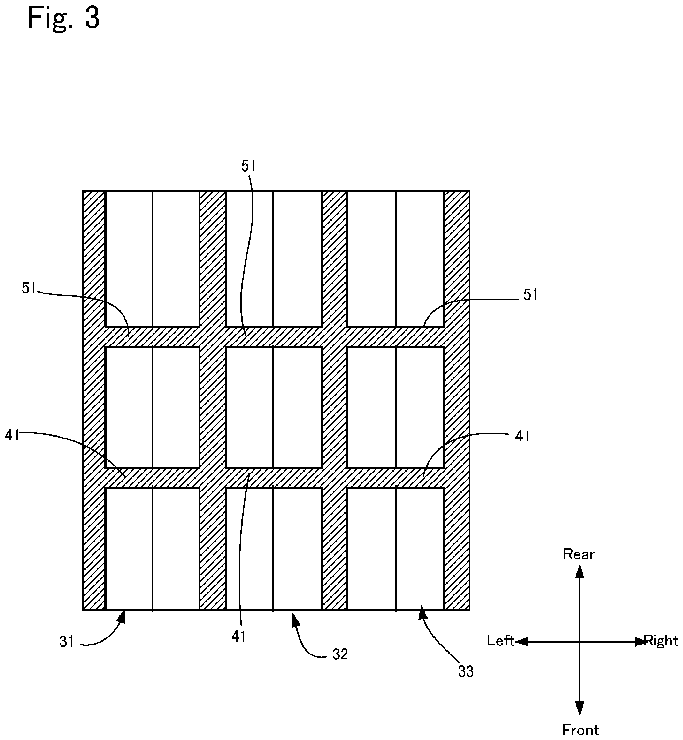

Hereinafter, an embodiment of a three-dimensional structure according to the present embodiment will be described. FIG. 1 is a perspective view of a three-dimensional structure, FIG. 2 is a front view of FIG. 1, and FIG. 3 is a cross-sectional view taken along the line A-A in FIG. 2. The three-dimensional structure is formed by a rubber composition. Note that the three-dimensional structure and so forth will be described in accordance with the up, down, front, rear, left, and right directions shown in FIG. 1 and so forth. The X direction, the Y direction, and the Z direction in the present invention correspond respectively to the front-rear direction, the left-right direction, and the up-down direction in the present embodiment, although the three-dimensional structure according to the present invention is not limited to this. In the following, the three-dimensional structure will be described first, and then a method for producing a rubber composition and the three-dimensional structure will be described.

### <1. Three-dimensional structure>

As shown in FIGS. 1 to 3, the three-dimensional structure according to the present embodiment is composed of a body portion 10, which is a combination of three triangular prisms having a triangular cross-sectional shape and five quadrangular prisms having a square cross-sectional shape, and two plate-shaped partition bodies 4, 5. In the following, the triangular prisms in the lowermost layer will be referred to as first, second, and third triangular prisms 11 to 13 in order from left in FIG. 2, the two quadrangular prisms in the second layer will be referred to as first and second middle-layer quadrangular prisms 21, 22 in order from left in the drawing, and the quadrangular prisms in the third layer will be referred to as first, second, and third upper-layer quadrangular prisms 31 to 33 in order from left in the drawing.

The triangular prisms 11 to 13 are composed of their respective plate-shaped bottom surface portion 111, 121, 131, their respective left inclined surface portion 112, 122, 132, and their respective right inclined surface portion 113, 123, 133. The quadrangular prisms are composed of their respective plate-shaped lower-left inclined surface portions 211, 221, 311, 321, 331, their respective lower-right inclined surface portions 212, 222, 312, 322, 332, their respective upper-left inclined surface portions 213, 223, 313, 323, 333, and their respective upper-right inclined surface portions 214, 224, 314, 324, 334. Note, however, that adjacent triangular prisms or quadrangular prisms share the surfaces constituting the triangular prisms or quadrangular prisms. For example, the right inclined surface portion 113 of the first triangular prism 11 and the lower-left inclined surface portion 211 of the first middle-layer quadrangular prism 21 are constituted by the same member. The detailed description will be given below.

As described above, the three-dimensional structure according to the present embodiment is composed of the body portion 10, which is a combination of the plurality of triangular prisms 11 to 13 and the plurality of quadrangular prisms 21, 22, 31 to 33, and the two partition bodies 4, 5. The triangular prisms 11 to 13 and the quadrangular prisms 21, 22, 31 to 33 are all formed by a hollow having an internal space, and each internal space is formed so as to extend in the front-rear direction. Then, the triangular prisms 11 to 13 are disposed such that the bottom surface portions 111, 121, 131 extend horizontally. The left inclined surface portions 112, 122, 132 and the right inclined surface portions 113, 123,133 are respectively coupled at right angles at the upper ends thereof.

The quadrangular prisms 21, 22, 31 to 33 are disposed such that the lower-left inclined surface portions 211, 221, 311, 321, 331 and the lower-right inclined surface portions 212, 222, 312, 322, 332 are each inclined at an angle of 45 degrees relative to a horizontal plane and are respectively coupled at an angle of 90 degrees. This also applies to the upper-left inclined surface portions 213, 223, 313, 323, 333, and the upper-right inclined surface portions 214, 224, 314, 324, 334. The first middle-layer quadrangular prism 21 is disposed between the first triangular prism 11 and the second triangular prism 12, and the second middle-layer quadrangular prism 22 is disposed between the second triangular prism 12 and the third triangular prism 13. As described above, the lower-left inclined surface portions 211, 221 and the lower-right inclined surface portions 212, 222 of the middle-layer quadrangular prisms 21, 22 are shared by the triangular prisms 11 to 13.

The first upper-layer quadrangular prism 31 is coupled to the upper-left inclined surface portion 213 of the first middle-layer quadrangular prism 21, and the second upper-layer quadrangular prism 32 is disposed between the first middle-layer quadrangular prism 21 and the second middle-layer quadrangular prism 22. The third upper-layer quadrangular prism 33 is coupled to the upper-right inclined surface portion 224 of the second middle-layer quadrangular prism 22. Then, as described above, in the upper-layer quadrangular prisms 31 to 33, at least one of the lower-left inclined surface portions 321, 331 and at least one of the lower-right inclined surface portions 312, 322 are also used as one of the upper-left inclined surface portions 213, 223 of the middle-layer quadrangular prism 21 to 23 and the lower-right inclined surface portions 214, 224.

Note that the internal spaces formed in the above-described triangular prisms 11 to 13 and quadrangular prisms 21, 22, 31 to 33 correspond to the through holes of the present invention. In the following, each of the triangular prisms and the quadrangular prisms that are to be combined may be occasionally referred to as a unit structure.

Next, the partition bodies 4, 5 will be described. As described above, the body portion 10 is provided with the two partition bodies 4, 5 that are formed in a plate shape. Each of the partition bodies 4, 5 is disposed such that the plane direction thereof extends in the up-down direction and the left-right direction. The two partition bodies 4, 5 are disposed at a predetermined interval in the front-rear direction. In the following, the partition body disposed on the front side will be referred to as a first partition body 4, and the partition body disposed on the rear side will be referred to as a second partition body 5.

The partition bodies 4, 5 are disposed at positions at which the body portion 10 is divided into three substantially equal portions in the front-rear direction. Then, the partition bodies 4, 5 are disposed so as to extend through all of the triangular prisms 11 to 13 and the quadrangular prisms 21, 22, 31 to 33 in the up-down direction and the left-right direction. That is, the partition bodies 4, 5 extend through the internal spaces of all of the triangular prisms 11 to 13 and the quadrangular prisms 21, 22, 31 to 33 in the up-down direction, and partition each internal space into three spaces in the front-rear direction. Of the three spaces, the space disposed at the center in the front-rear direction is defined as a closed space by the two partition bodies 4, 5, as shown in FIG. 3. Here, in the partition bodies 4, 5, portions partitioning the internal spaces of the triangular prisms 11 to 13 and the quadrangular prisms 21, 22, 31 to 33 will be referred to as partition portions 41, 51.

The partition bodies 4, 5 form protruding portions 42, 52 having a triangular shape as seen in front view and protruding between the upper-right inclined surface portion 314 of the first upper-layer quadrangular prism 31 and the left inclined surface portion 323 of the second upper-layer quadrangular prism 32. Similarly, protruding portions 42, 52 having a triangular shape as seen in front view are formed between the upper-right inclined surface portion 324 of the second upper-layer quadrangular prism 32 and the left inclined surface portion 333 of the third upper-layer quadrangular prism 33.

### <2. Rubber composition>

Next, a rubber composition for forming the above-described three-dimensional structure will be described. The rubber composition includes a liquid rubber. A known liquid rubber can be used as the liquid rubber without any particular limitation. Specific examples of the liquid rubber include a liquid butadiene rubber, a liquid styrene-butadiene copolymer rubber, a liquid isoprene-butadiene copolymer rubber, a liquid isoprene rubber, a liquid hydrogenated isoprene rubber, and a liquid isoprene-styrene copolymer rubber. Among them, from the viewpoint of providing a viscosity suitable for three-dimensional additive manufacturing, while achieving excellent rubber characteristics (e.g., Shore hardness, elongation at break, breaking stress, and compression permanent strain, which will be described later) for a three-dimensional structural body, which is a rubber molded body obtained by curing, it is preferable to use a liquid rubber including an unsaturated bond of a (meth)acryloyl group, a vinyl group or the like that is cross-linked by heat, light, electron beams or the like, and a liquid rubber including a cyclic ether such as an epoxy compound or an oxetane compound, and it is particularly preferable to use a liquid rubber including a (meth) acryloyl group. One of the liquid rubbers may be included alone, or two or more of them may be included. Note that in the present invention "(meth)acryloyl group" means "acryloyl group or methacryloyl group", and the same applies to similar expressions.

From the viewpoint of providing a viscosity suitable for three-dimensional additive manufacturing, while achieving excellent rubber characteristics for a three-dimensional structural body obtained by curing, the liquid rubber content in the rubber composition may be, but is not particularly limited to, preferably 40 mass% or more, more preferably about 45 to 90 mass%, further preferably about 50 to 70 mass%.

From a similar viewpoint, the number-average mean molecular weight (Mn) of the liquid rubber may be, but is not particularly limited to, preferably 500 or more, more preferably about 5,000 to 60,000, further preferably about 5,000 to 40,000.

Note that the number-average mean molecular weight (Mn) of the liquid rubber is a value measured using a gel permeation chromatograph, and converted by standard polystyrene.

Furthermore, from the viewpoint of providing a viscosity suitable for three-dimensional structure, while achieving excellent rubber characteristics for a three-dimensional structural body obtained by curing, the rubber composition may include a co-cross-linking agent. As the co-cross-linking agent, a known co-cross-linking agent such as a photoreactive resin can be used. Specific examples of the co-cross-linking agent include zinc acrylate, magnesium acrylate, zinc methacrylate, magnesium methacrylate; co-cross-linking agents including an unsaturated bond such as a styrene monomer, a (meth)acrylate monomer, and a (meth)acrylamide monomer, and oligomers thereof. One of the co-cross-linking agents may be included alone, or two or more of them may be included.

From the viewpoint of providing a viscosity suitable for three-dimensional additive manufacturing, while achieving excellent rubber characteristics for a three-dimensional structural body obtained by curing, the co-cross-linking agent content in the rubber composition may be, but is not particularly limited to, preferably 1 mass% or more, more preferably about 5 to 50 mass%, further preferably about 10 to 30 mass%.

From the viewpoint of providing a viscosity suitable for a three-dimensional structure, while achieving excellent rubber characteristics for a three-dimensional structural body obtained by curing, the rubber composition may include a vulcanized rubber. A known vulcanized rubber obtained by vulcanizing a natural rubber or a synthetic rubber can be used as the vulcanized rubber without any particular limitation. Examples of the rubber component constituting the vulcanized rubber include a natural rubber, an isoprene rubber, a butadiene rubber, a styrene butadiene rubber, a butyl rubber, an ethylene propylene diene rubber, an ethylene propylene rubber, a chloroprene rubber, an acrylonitrile-butadiene rubber, chlorosulfonated polyethylene, an epichlorohydrine rubber, chlorinated polyethylene, a silicone rubber, a fluorine rubber, and a urethane rubber. Among them, from the viewpoint of providing a viscosity suitable for three-dimensional additive manufacturing, while achieving excellent rubber characteristics for a three-dimensional structural body obtained by curing, a vulcanized rubber obtained by vulcanizing a natural rubber is preferable. One of the vulcanized rubbers may be included alone, or two or more of them may be included.

From the viewpoint of providing a viscosity suitable for a three-dimensional structure, while achieving excellent rubber characteristics for a three-dimensional structural body obtained by curing, the vulcanized rubber is preferably in the form of fine particles . The particle diameter of the vulcanized rubber is not particularly limited, but, from a similar viewpoint, the central particle diameter is preferably about 200 µm or less, more preferably about 100 µm or less, further preferably about 50 µm or less.

Note that the central particle diameter of the vulcanized rubber in the present invention is a median diameter (cumulative 50% particle diameter) obtained using a laser diffraction/scattering particle diameter measurement device.

From the viewpoint of providing a viscosity suitable for three-dimensional additive manufacturing, while achieving excellent rubber characteristics for a three-dimensional structural body obtained by curing, the vulcanized rubber content in the rubber composition may be, but is not particularly limited to, preferably 10 mass% or more, more preferably about 20 to 80 mass%, further preferably about 30 to 50 mass%.

The rubber composition preferably includes a radical initiator. The inclusion of a radical initiator can accelerate the curing of the above-described liquid rubber. A known radical initiator that generates radicals by heating, light irradiation, electron beam irradiation, or the like can be used as the radical initiator without any particular limitation. Examples of a preferable radical initiator include acetophenone, 4,4'-dimethoxy benzyl, dibenzoyl, 2-hydroxy-2-phenylacetophenone, benzophenone, benzophenone-2-carboxylic acid, benzophenone-4-carboxylic acid, methyl benzophenone-2-carboxylate, N,N,N',N'-tetraethyl-4,4'-diaminobenzophenone, 2-methoxy-2-phenylacetophenone, 2-isopropoxy-2-phenylacetophenone, 2-isobutoxy-2-phenylacetophenone, 2-ethoxy-2-phenylacetophenone, 2,2'-bis(2-chlorophenyl)-4,4',5,5'-tetraphenyl-1,2'-biimidazole, 2-(1,3-benzodioxole-5-yl)-4,6-bis(trichloromethyl)-1,3,5-triazine, 2-benzyl-2-(dimethylamino)-1-[4-(morpholino)phenyl]-1-butanone, 4,4'-dichlorobenzophenone, 2,2-diethoxyacetophenone, 2,2-dimethoxy-2-phenylacetophenone, 2,4-diethyl thioxanthene-9-one, diphenyl(2,4,6-trimethyl benzoyl)phosphine oxide, phenyl bis(2,4,6-trimethylbenzoyl)phosphine oxide, 1,4-dibenzoylbenzene, 2-ethylanthraquinone, 1-hydroxycyclohexyl phenyl ketone, 2-hydroxy-2-methyl propiophenone, 2-hydroxy-4'-(2-hydroxy ethoxy)-2-methylpropiophenone, 2-methyl-4'-(methylthio)-2-morpholinopropiophenone, 2-isonitrosopropiophenone, 2-phenyl-2-(p-toluenesulfonyloxy)acetophenone, phenylglyoxylic acid methyl ester, 1,2-octanedione,1-[4-(phenyl thio)-,2-(O-benzoyloxime)], and ethanone,1-[9-ethyl-6-(2-methylbenzoyl)-9H-carbazole-3-yl]-,1-(O-acetyloxime). The radical initiator may be used alone or in combination of two or more.

The radical initiator content may be preferably about 0.5 to 10 parts by mass, more preferably about 1 to 7 parts by mass, per 100 parts by mass of the liquid rubber.

The rubber composition may further include a filler. The inclusion of a filler makes it possible to adjust the viscosity of a rubber composition for three-dimensional additive manufacturing, and the rubber characteristics for a three-dimensional structural body obtained by curing.

The filler is not particularly limited, and examples thereof include carbon black, silica, calcium carbonate, clay, and talc. In the case of using silica as the filler, a silica that has not been surface-modified may be used. By using a surface-modified silica that has been surface-modified with a silane coupling agent or the like, or a mixture of silica and a silane coupling agent as the filler, it is possible to further increase the mechanical strength of a three-dimensional structural body obtained by curing. The filler may be used alone or in combination of two or more.

When the rubber composition includes a filler, it may further include a silane coupling agent. In particular, when a filler that has not been surface-modified is formulated, the inclusion of a silane coupling agent enables the liquid rubber and the filler to be firmly bonded, making it possible to achieve excellent rubber characteristics for a three-dimensional structural body obtained by curing.

From the viewpoint of providing a viscosity suitable for three-dimensional additive manufacturing, while achieving excellent rubber characteristics for a three-dimensional structural body obtained by curing, the filler content may be, but is not particularly limited to, preferably 5 mass% or more, more preferably about 5 to 70 mass%, further preferably about 10 to 50 mass%.

From the viewpoint of providing a viscosity suitable for three-dimensional additive manufacturing, while achieving excellent rubber characteristics for a rubber molded body obtained by curing, the rubber composition may include a polyrotaxane capable of being chemically bonded to the liquid rubber. A polyrotaxane is a compound in which capping groups are disposed at both ends of a pseudopolyrotaxane (both ends of a linear molecule) in which the opening part of a cyclic molecule is included in a linear molecule in a skewed manner, and a known polyrotaxane may be used.

Examples of the linear molecule constituting the polyrotaxane include polycaprolactone, a styrene-butadiene copolymer, an isobutene-isoprene copolymer, polyisoprene, a natural rubber (NR), polyethylene glycol, polyisobutylene, polybutadiene, polypropylene glycol, polytetrahydrofuran, polydimethylsiloxane, polyethylene, polypropylene, and an ethylene-polypropylene copolymer.

The linear molecule may be, for example, a polymer of one or more aromatic vinyl compounds such as styrene, α-methylstyrene, 1-vinylnaphthalene, 3-vinyltoluene, ethylvinylbenzene, divinylbenzene, 4-cyclohexylstyrene, and 2,4,6-trimethylstyrene; a polymer of one or more conjugated diene compounds such as 1,3-butadiene, isoprene, 1,3-pentadiene, 2,3-dimethylbutadiene, 2-phenyl-1,3-butadiene, and 1,3-hexadiene; or a copolymer or the like of the aromatic vinyl compound and the conjugated diene compound.

Any of these linear molecules may be used alone or in combination of two or more. The linear molecule preferably has a weight-average molecular weight of about 10000 or more and 1000000 or less. Examples of the capping groups that cap both ends of the linear molecule include a dinitrophenyl group, an adamantyl group, a trityl group, fluoresceine, pyrene, or one or more derivatives thereof.

Examples of the cyclic molecule include cyclodextrin, crown ether, benzocrown, dibenzocrown, dicyclohexanocrown, or one or more derivatives thereof. As the cyclic molecule, α-, β-, or γ-cyclodextrin or one or more derivatives thereof are particularly preferable.

The polyrotaxane is capable of being chemically bonded to the liquid rubber. More specifically, the polyrotaxane includes a functional group capable of being chemically bonded to the liquid rubber. The functional group is preferably present at side chains of the cyclic molecule.

In the polyrotaxane, the functional group capable of being chemically bonded to the liquid rubber is not particularly limited, but is preferably an unsaturated bond such as a (meth) acryloyl group or vinyl group that is cross-linked by heat, light, electron beams, and is particularly preferably a (meth)acryloyl group. When the above-described liquid rubber includes the above-described unsaturated bond, which is cross-linked by heat, light, electron beams, or the like, the unsaturated bond of the liquid rubber and the functional group of the polyrotaxane can be chemically bonded.

As the polyrotaxane, a commercially available product can also be used. Examples of a commercially available product of an ultraviolet-curable polyrotaxane include SeRM (registered trademark) super polymers SM3403P, SA3403P, SA2403P, SM1313P, and SA1313P manufactured by Advanced Softmaterials Inc. Each of these products is supplied as a 50 mass% MEK solution, and SM3405P, SA3405P, SA2405P, etc., are each supplied as a 70 mass% ethyl acetate solution. Further, as the ultraviolet-curable polyrotaxane, a polyrotaxane in which a reactive diluent such as an acrylic oligomer is formulated is also supplied. Examples of such a product include SeRM (registered trademark) Key-Mixture SM3400C, SA3400C, SA2400C, etc., manufactured by Advanced Softmaterials Inc.

The polyrotaxane may be used alone or in combination of two or more.

From the viewpoint of providing a viscosity suitable for three-dimensional additive manufacturing, while achieving excellent rubber characteristics for a rubber molded body obtained by curing, the polyrotaxane content contained in the rubber composition may be, but is not particularly limited to, preferably approximately 1 mass% or more, more preferably about 1 to 20 mass%, further preferably about 2 to 10 mass%, particularly preferably about 3 to 10 mass%.

Furthermore, the rubber composition may further include various additives within the range that does not impair the effects of the present invention. The additives are not particularly limited, and examples thereof include a polymer, a dye, a pigment, a leveling agent, a fluidity adjustor, an antifoaming agent, a plasticizer, a polymerization inhibitor, a flame retardant, a dispersion stabilizer, a storage stabilizer, an antioxidant, a metal, a metal oxide, a metal salt, and a ceramic. The rubber composition may include one additive, or two or more additives.

The viscosity of the rubber composition for a three-dimensional structure is not particularly limited as long as the viscosity allows rendering and lamination to be performed by a production apparatus of the three-dimensional structure. From the viewpoint of being suitable for a three-dimensional structure and achieving excellent rubber characteristics for a three-dimensional structural body obtained by curing, the viscosity measured using an E-type viscometer under an environment at a temperature of 60°C (with an error of ±2°C) and a relative humidity of 50% may be preferably 1500 Pa·s or less, more preferably about 0.1 to 1500 Pa·s, further preferably about 1 to 1000 Pa·s. More specifically, this viscosity is a viscosity measured using an E-type viscometer (MCR301 manufactured by Anton-Paar) with an amplitude of 1% and a frequency of 1 Hz.

As described above, the rubber composition for a three-dimensional structure according to the present embodiment can be easily produced by mixing a liquid rubber with a co-cross-linking agent, a vulcanized rubber, an initiator, a filler, a polyrotaxane, various additives and the like that are included as needed.

Note that when the above-described rubber composition including a polyrotaxane capable of being chemically bonded to to a liquid rubber is used for producing a rubber molded body, the liquid rubber and the polyrotaxane form a chemical bond in a cured material constituting the rubber molded body.

As a result of a three-dimensional structure being produced by the rubber composition described above, the three-dimensional structure preferably has physical properties such as those shown below. That is, the Shore A hardness of the three-dimensional structure may be appropriately set in accordance with the hardness required for the product, but may be in the range of preferably 25 to 90, from the viewpoint of achieving excellent rubber characteristics. Note that the Shore A hardness is a value measured in accordance with the method prescribed in JIS K6253.

The elongation at break of the three-dimensional structure may be appropriately set in accordance with the elongation at break required for the product, but may be preferably 50% or more, more preferably 90% or more, from the viewpoint of achieving excellent rubber characteristics. The upper limit of the elongation at break is usually about 500%. Note that this elongation is a value measured in accordance with the method prescribed in JIS K6251.

The breaking stress of the three-dimensional structure may be appropriately set in accordance with the breaking stress required for the product, but may be preferably 0.7 MPa or more, from the viewpoint of achieving excellent rubber characteristics. The upper limit of the breaking stress is usually about 30 MPa. Note that this breaking stress is a value measured in accordance with the method prescribed in JIS K6251.

Furthermore, the compression permanent strain (after 24 hours) of the three-dimensional structure may be appropriately set in accordance with the compression permanent strain required for the product, but may be in the range of preferably 10% or less, more preferably 7% or less, from the viewpoint of achieving excellent rubber characteristics. The compression permanent strain (after 0.5 hours) may be appropriately set in accordance with the compression permanent strain required for the product, but may be in the range of preferably 20% or less, more preferably 15% or less, from the viewpoint of achieving excellent rubber characteristics. Note that this compression permanent strain is a value measured in accordance with the method prescribed in JIS K6262.

### <3. Method for producing three-dimensional structural body>

Next, a method for producing a three-dimensional structure configured in the above-described manner will be described. In this production method, the visocosity of the rubber composition is reduced by heating as needed, and the rubber composition is dropped from a nozzle, thereby forming a thin film having a predetermined shape and pattern. Then, the dropped thin-film rubber composition is subjected to heating, light irradiation , or electron beam irradiation, thereby curing the rubber composition. Thereafter, the rubber composition is laminated while repeating the dropping and the curing of the rubber composition, to form a three-dimensional structure. Accordingly, when the visocosity of the rubber composition is not high, the rubber composition can be dropped without being heated. Even when the visocosity of the rubber composition is somewhat high, the rubber composition can be dropped without being heated, depending on the apparatus. Therefore, the heating of the rubber composition may not be necessarily performed.

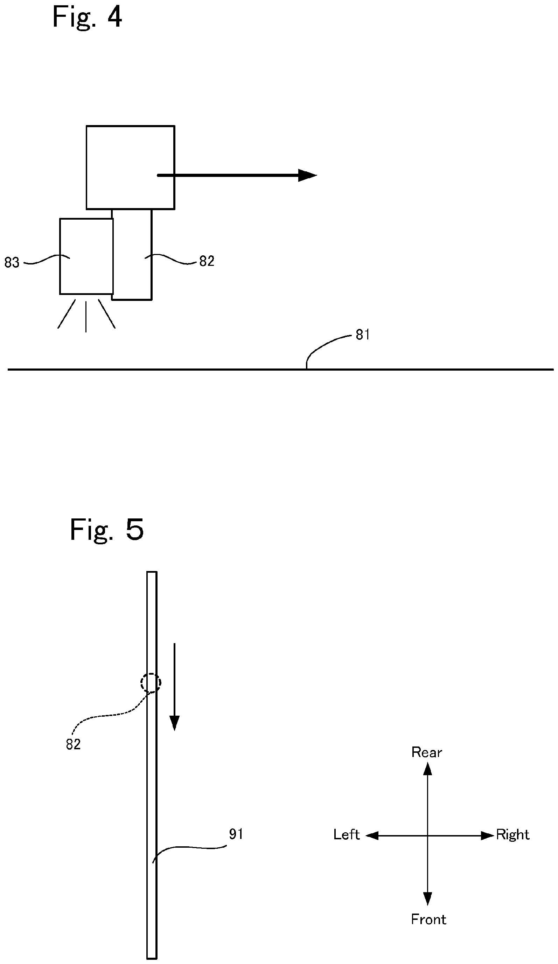

Specifically, a production apparatus as shown in FIG. 4 is provided, for example. The production apparatus includes a horizontal table 81 and a nozzle 82 capable of moving upward and downward, forward and rearward, and leftward and rightward, above the table 81. The nozzle 82 is configured such that a heated rubber composition is dropped therefrom. The heating temperature of the rubber composition is not particularly limited, but is set to be preferably about 15 to 170°C, more preferably about 30 to 160°C. The heating time is set to be preferably about 1 to 60 minutes, more preferably about 5 to 30 minutes. Note that the diameter of the discharge outlet of the nozzle 82 is not particularly limited, but is set to be, for example, preferably about 0.001 to 1 mm, more preferably about 0.01 to 0.5 mm. Consequently, when the rubber composition is dropped, a line having a line width and a thickness that are comparable to the diameter of the discharge outlet is formed as will be described next.

Furthermore, in the production apparatus 8, a light irradiation device 83 is attached to the nozzle 82, and the light irradiation device is configured to be movable together with the nozzle 82. Then, the dropped rubber composition is cured by the light emitted from the light irradiation device 83. For example, ultraviolet irradiation is preferable as such light irradiation, and it is preferable that the rubber composition is cured at a wavelength of about 365 nm under conditions of an ultraviolet intensity of about 1 mW/cm² to 10 W/cm² and an accumulated light amount of about 1 mJ/cm² to 100 J/cm².

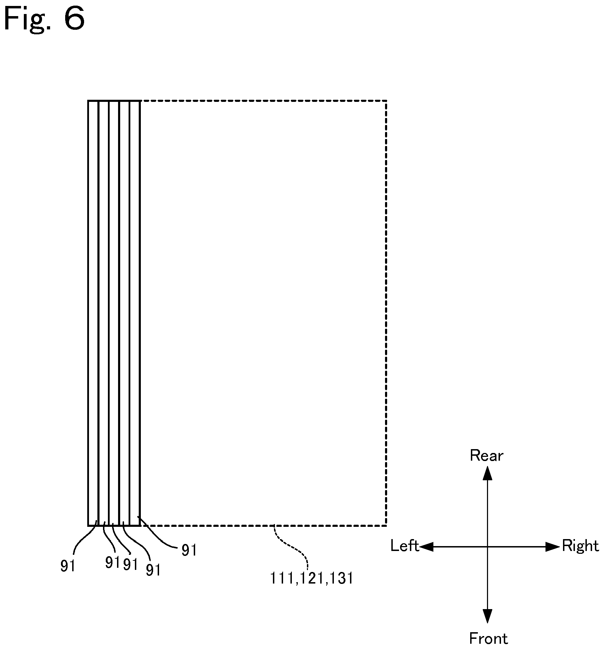

Next, a specific method for producing the above-described three-dimensional structure will be described. As shown in FIG. 5, first, the rubber composition is dropped while moving the nozzle 82 in the front-rear direction, to form a first line 91 extending in the front-rear direction. In the following, linear rubber compositions extending in the front-rear direction will be all referred to as a first line 91. At this time, the rubber composition dropped from the nozzle 82 is cured by light, such as ultraviolet light, emitted from the light irradiation device 83 that moves together with the nozzle 82. Consequently, a cured first line 91 is formed on the table 81. Then, as shown in FIG. 6, a first line 91 extending in the front-rear direction is formed in the same manner so as to be in contact with the cured first line 91. Thus, while repeating the movement of the nozzle 91 in the front-rear direction, first lines 91 are aligned in the left-right direction, to form a plate-shaped portion. This will serve as the bottom surface portions 111, 121, 131 of the three triangular prisms 11 to 13 of the three-dimensional structure.

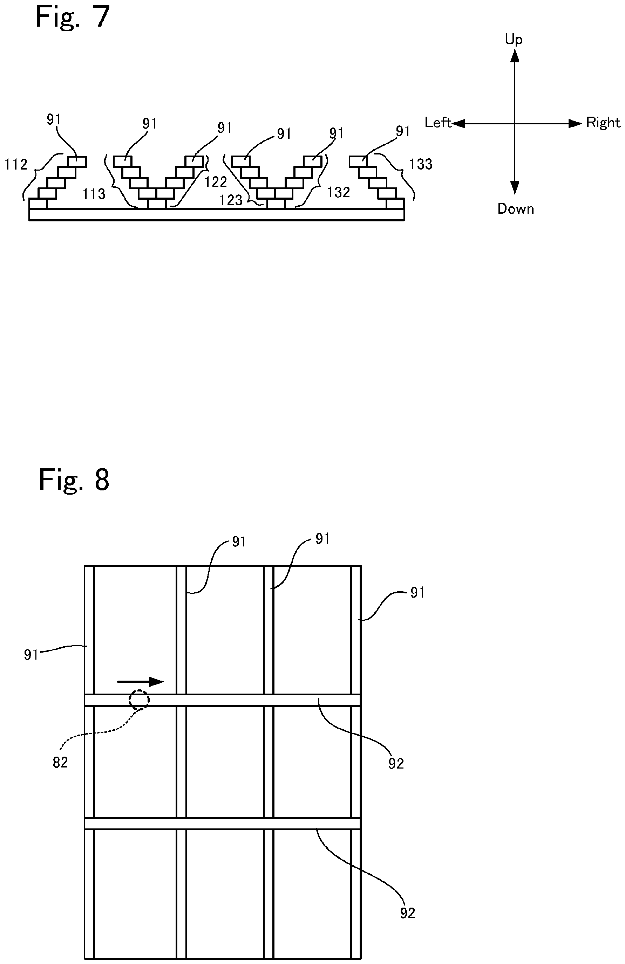

Next, while stacking the first lines 91 on the bottom surface portions 111, 121, 131, the left inclined surface portions 112, 122, 132 and the right inclined surface portions 113, 123, 133 of the three triangular prisms 11 to 13 are formed. At this time, the left inclined surface portions 112, 122, 132 and the right inclined surface portions 113, 123, 133 are inclined, and therefore the first lines 91 are stacked while being shifted in the left-right direction. For example, as shown in FIG. 7, in order to form the left inclined surface portions 112, 122, 132, the first lines 91 are stacked so as to be gradually shifted to the right side. At this time, the rubber composition has a certain degree of visocosity, and is cured. Accordingly, even when the first lines 91 are obliquely stacked, the inclined surface portions can be formed without collapsing. This also applied to the quadrangular prisms 21, 22, 31 to 33.

The partition bodies 4, 5 are also formed in the same manner. First, as shown in FIG. 8, while moving the nozzle 82 in the left-right direction, the rubber composition is dropped, to form a second line 92 extending in the left-right direction. In the following, linear rubber compositions extending in the left-right direction will be all referred to as a second line. Then, the second lines 92 are stacked, thereby forming the partition bodies 4, 5.

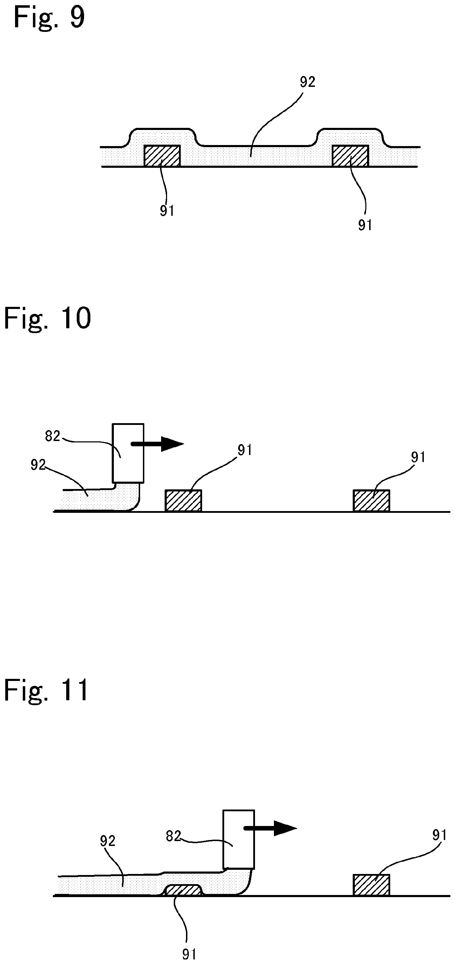

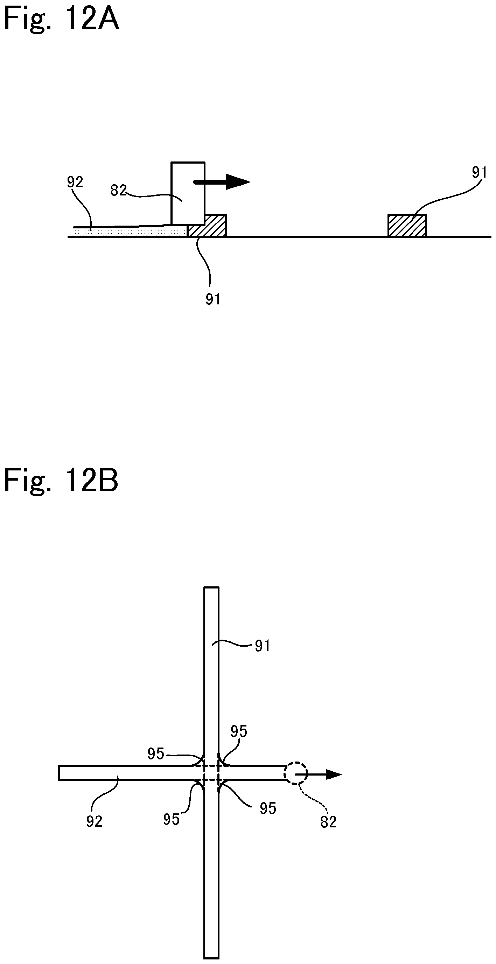

Meanwhile, since the second line 92 is stacked so as to intersect the first line 91, two layers are stacked at the portion at which the first line 91 and the second line 92 intersect, as shown in FIG. 9. Accordingly, this portion has an increased thickness as compared with a portion at which only the first line 91 or the second line 92 is stacked. As a result, only the thickness of the intersection portion is increased. Therefore, in the present embodiment, the discharge outlet of the nozzle 82 is brought into proximity to the already stacked first line 91 (e.g., the distance between the first line 91 and the discharge outlet is made as close to 0 mm as possible), and the rubber composition is dropped while compressing the first line 91, as shown in FIG. 10. Accordingly, as shown in FIG. 11, a layer having a thickness substantially corresponding to one layer can be also formed at the intersection portion of the first line 91 and the second line 92. In addition, as shown in FIG. 12A, when the discharge outlet of the nozzle 82 is positioned below the upper end of the first line 91, and is caused to intersect the first line 91 while discharging the rubber composition from the nozzle 82, the lower end portion of the nozzle 82 pushes the first line 91 outward of the plane direction from the intersection portion. Accordingly, as shown in FIG. 12B, the intersection portion of the first line 91 and the second line 82 expands more widely than when the two lines 91, 92 are simply placed on top of each other.

Thus, when the body portion 10 and the partition bodies 4, 5 are formed while stacking the first lines 91 and the second lines 92 layer by layer, a three-dimensional structure as shown in FIG. 1 is formed. Note that the width and the thickness of the lines 91, 92 shown in FIGS. 7 to 11 described above are shown for the convenience of description, and differ from the actual scale of the three-dimensional structure.

Note that at the time of laminating the rubber composition, it is preferable that the rubber composition is laminated on the rubber composition that has been already discharged, before the already discharged rubber composition is completely cured. That is, by laminating the rubber composition on the already discharged rubber composition in a semi-cured state or in a process of being completely cured, it is possible to prevent the laminated rubber composition from being detached on the interface.

### <4. Features>

As described above, the three-dimensional structure according to the present embodiment is formed by a rubber composition, and has, as seen in front view, a mesh configuration (or lattice configuration) having a plurality of internal spaces by combining a plurality of polygonal prisms. Accordingly, the three-dimensional structure has high cushioning properties against a force exerted from the up-down direction or the left-right direction, and can be effectively used as a buffer material. Such a three-dimensional structure can be effectively used for, for example, the sole portion or insole of shoes, a constructional gasket, a bicycle saddle, medical equipment, and the like.

On the other hand, the three-dimensional structure is provided with the plate-shaped partition bodies 4, 5 extending in the up-down direction and the left-right direction, and therefore the partition bodies 4, 5 resist a force exerted from these directions. Accordingly, it is possible to prevent the three-dimensional structure from being easily deformed. That is, with the partition bodies 4, 5, it is possible to adjust the degree of elastic deformation of the three-dimensional structure such that the three-dimensional structure cannot be easily deformed without a load exceeding a certain level being applied thereto. In particular, in the present embodiment, the closed space sandwiched between the two partition bodies 4, 5 is formed in each of the triangular prisms 11 to 13 and the quadrangular prisms 21, 22, 31 to 33, and it is therefore possible to prevent deformation particularly in the location where this closed space is present. Accordingly, the provision of the partition bodies makes it possible to easily adjust the cushioning properties. As will be described later, the cushioning properties can be adjusted as appropriate.

### <5. Modifications>

Although an embodiment of the present invention has been described above, the present invention is not limited to the above embodiment, and various modification can be made without departing from the gist of the invention. Also, modifications shown below can be combined as appropriate.

### <5-1>

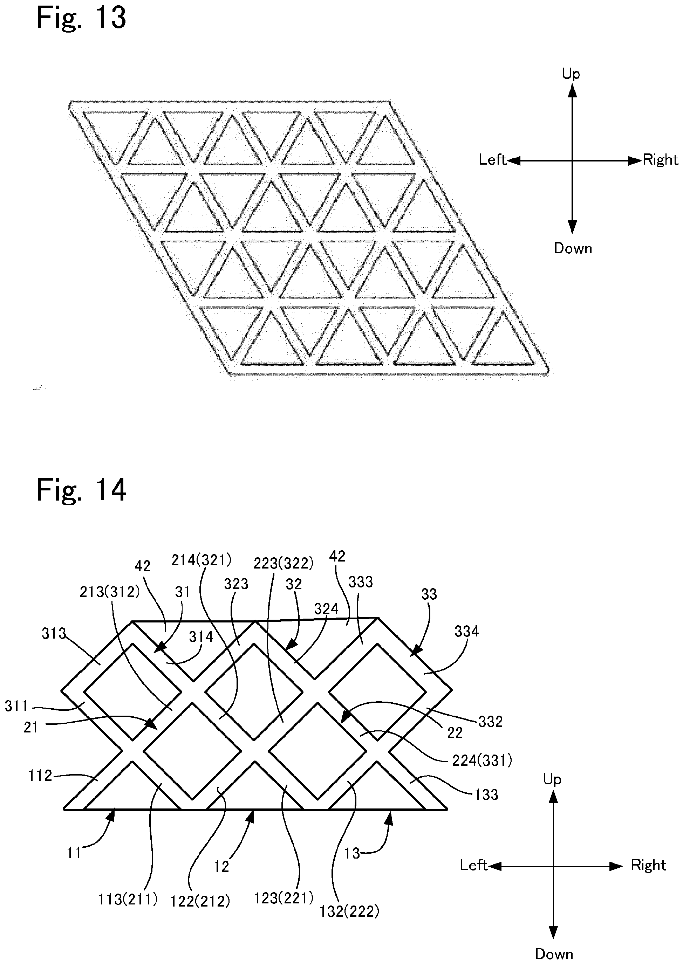

In the above embodiment, the three-dimensional structure is formed by combining a plurality of triangular prisms and quadrangular prisms. However, the number and the shape of the unit structures to be combined are not particularly limited. The body portion of the three-dimensional structure, in which internal spaces are disposed in a lattice or mesh configuration, according to the present invention can be formed by aligning or stacking unit structures whose internal spaces extend in a single direction (e.g., the front-rear direction) in at least one direction (e.g., the left-right direction and the up-down direction) orthogonal to the single direction. The cross section of the internal spaces of the unit structures may have various shapes such as a polygonal shape, a circular shape, and an oval shape, in addition to triangular and square shapes as in the above embodiment, without any particular limitation. The closed space surrounded by the partition portions can have the shape of a regular polyhedron such as regular octahedron and a three-dimensional shape such as a spherical shape, in addition to the above-described rectangular solid shape, without any particular limitation. Also, the manner of alignment in the up-down direction and the left-right direction is not particularly limited, and the internal spaces may be aligned obliquely as shown in FIG. 13, for example.

Some of the internal spaces may have a solid portion filled with the rubber composition. For example, the middle-layer quadrangular prisms 21, 22 may be filled up with the rubber composition, and the internal spaces may be formed in the lowermost layer composed of the triangular prisms 11 to 13 and the three upper-layer quadrangular prisms 31 to 33. That is, the internal space may be formed at any position. This makes it possible to adjust the cushioning properties of the three-dimensional structure.

Although the bottom surface portions 111, 121, 131 are formed by the triangular prisms 11 to 13 in the above embodiment, the bottom surface portions 111, 121, 131 may not be necessarily required. For example, as shown in FIG. 14, the bottom surface portions may be omitted, and the bottom portion of the three-dimensional structure may be formed only by the inclined surface portions. Similarly, end faces (e.g., an upper face and left and right faces) of the three-dimensional structure may be formed only by the inclined surface portions.

Although each of the inclined surface portions is formed at an angle of approximately 45 degrees in the above embodiment, the angle of the inclined surface portions is not particularly limited. For example, by adjusting the visocosity of the rubber composition and the degree of curing of the rubber composition by light irradiation, the angle of the inclined surface portions can be appropriately changed, and can be adjusted between 30 to 90 degrees, for example. When the inclined surface portions are stacked at an angle of 90°, for example, a sheet-like rubber composition may cover thereon, to form internal spaces (a pattern in which the inclined surface portions formed at an angle of 90 degrees are simply stacked).

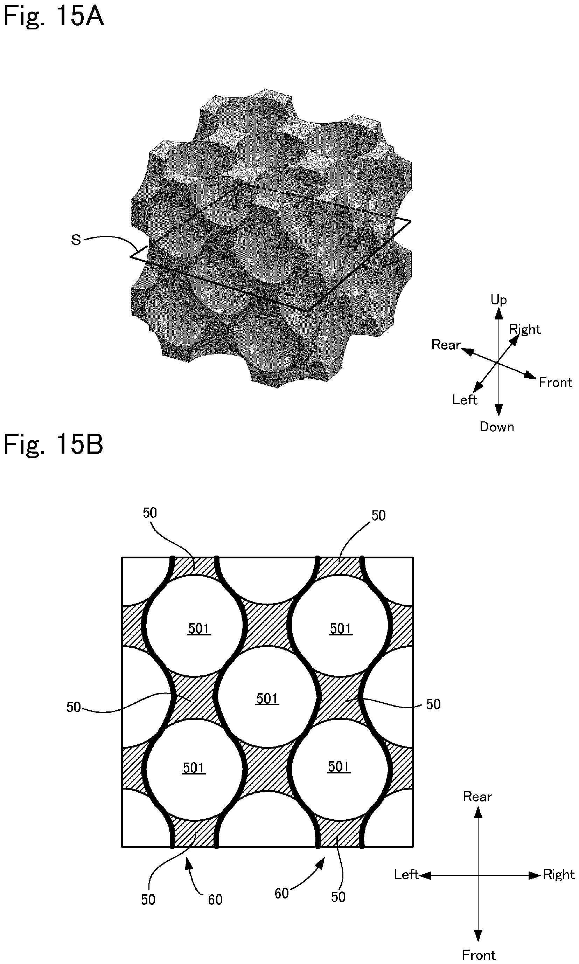

Furthermore, in the above embodiment, the unit structures extending in the front-rear direction are formed in a cross-sectionally polygonal shape, thereby forming the internal spaces of the through holes according to the present invention. However, the shape of the internal spaces serving as the through holes may change in the front-rear direction. For example, as shown in FIG. 15A, the three-dimensional structure may have a structure in which spheres located at the lattice portion of a face-centered cubic structure are configured to be hollow. In this case, FIG. 15B shows a cross section passing through the plane S in the three-dimensional structure shown in FIG. 15A. Through holes (portions divided by the solid outlines) 60 extending in the front-rear direction are formed so as to change their shapes along the front-rear direction, and the portions between hollow spheres 501 constituting the lattice serve as partition portions 50. Therefore, the partition portions 50 also may not necessarily have a plate shape, and the shape of the partition portions 50 is not particularly limited as long as the partition portions 50 are formed so as to partition adjacent spaces.

### <5-2>

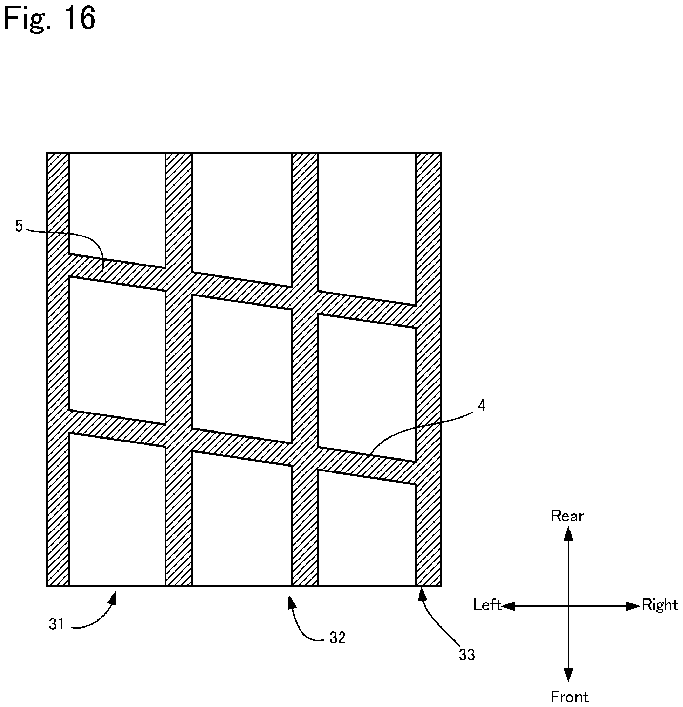

The number of the partition bodies is not particularly limited, and one or three or more partition bodies may be provided. Although the partition bodies 4, 5 are formed so as to extend in the up-down direction and the left-right direction in the above embodiment, they may be inclined as seen in plan view, as shown in FIG. 16.

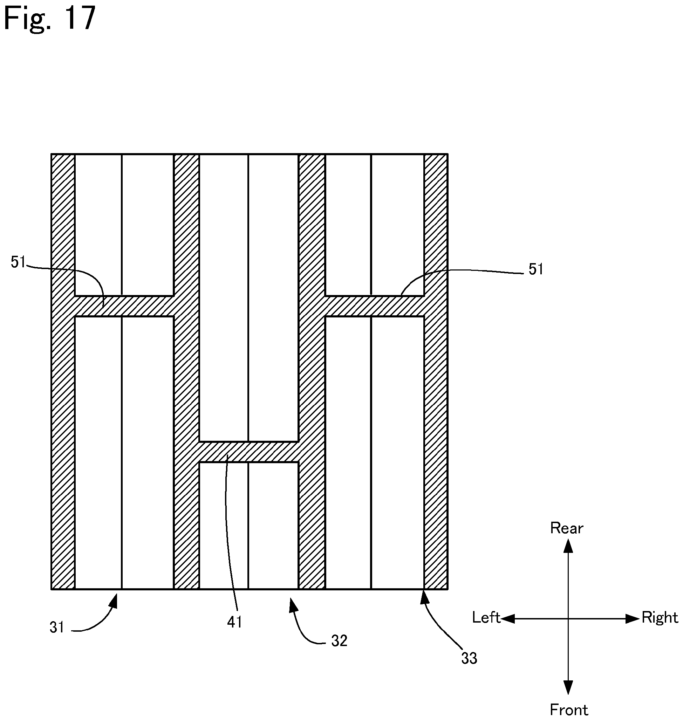

In the above embodiment, the partition bodies 4, 5 are formed so as to extend through all of the triangular prisms and the quadrangular prisms. That is, the partition portions 41, 51 formed in adjacent triangular prisms 11 to 13 or quadrangular prisms 21, 22, 31 to 33 are configured to be adjacent. However, the present invention is not limited thereto. For example, as shown in FIG. 17, only given triangular prisms and quadrangular prisms may be provided with partition portion 41, 51, which constitute a part of the partition bodies 4, 5. The partition portions may be formed at any position, in the front-rear direction, of each of the triangular prisms and the quadrangular prisms.

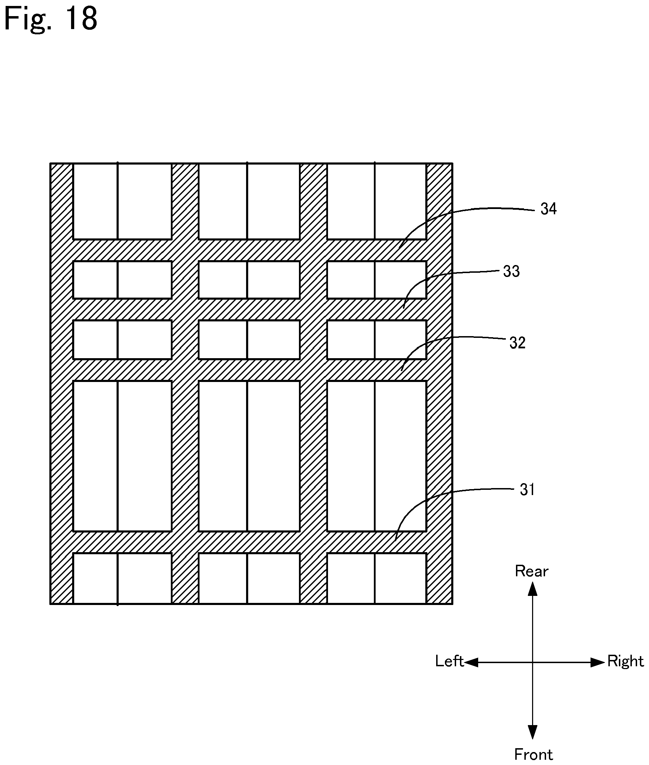

Furthermore, as shown in FIG. 18, a plurality of partition bodies 31, 32, 33, 34 may be provided, at different intervals. In the example shown in FIG. 18, the interval between the partition bodies 31 and 32 is large on the front side, and the intervals between the partition bodies 32, 33, 34 are narrowed on the rear side. Consequently, the three-dimensional structure is more susceptible to deformation on its front side, and is less susceptible to deformation on its rear side. With this structure, the degree of elastic deformation can be varied for each region, thus also varying the weight distribution in the three-dimensional structural body.

### <5-3>

In the above embodiment, the three-dimensional structure is configured by combining tubular unit structures having internal spaces (through holes). However, the three-dimensional structure can be configured, for example, by aligning shaft members extending in a single direction, and coupling the shaft members. This will be described in detail below.

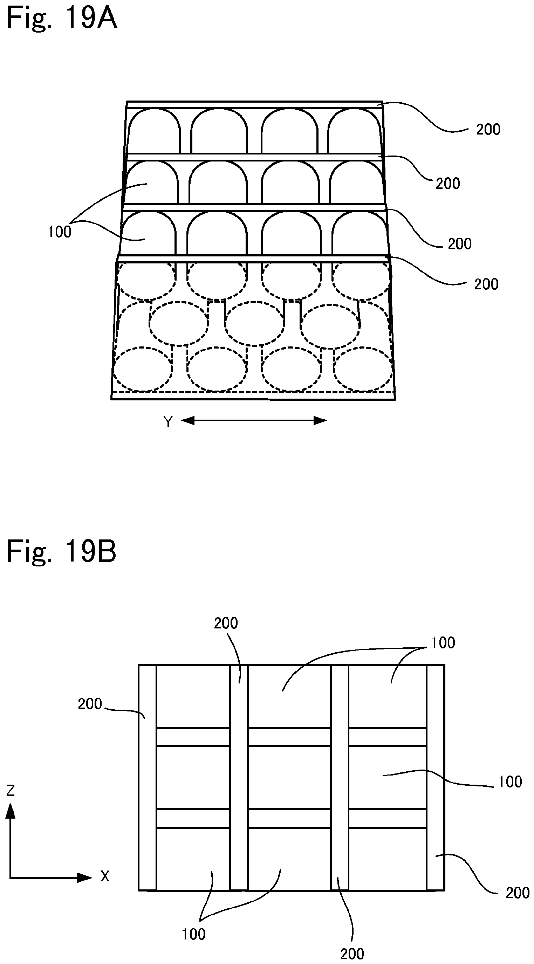

As shown in FIGS. 19A and 19B, the three-dimensional structure is disposed in a three-dimensional space defined by X, Y, and Z directions. Then, the three-dimensional structure includes a plurality of cylindrical shaft members 100 extending in the X direction, and the plurality of shaft members 100 are disposed at predetermined intervals in the Y direction and the Z direction. Also, the three-dimensional structure includes, in two locations in the X direction, a plurality of plate-shaped coupling portions 200 extending in the Y-Z direction, and the coupling portions 200 are configured to couple the adjacent shaft members 100. Note that an assembly of the above-described shaft members 100 corresponds to the body portion of the present invention.

Such a three-dimensional structure has spaces formed between the shaft members 100, and thus can achieve high cushioning properties. On the other hand, the shaft members 100 are coupled by the coupling portions 200, and it is therefore possible to inhibit an excessive deformation. Note that the orientation in which the three-dimensional structure is used is not particularly limited, and the three-dimensional structure can also be disposed in an orientation in which a force acts in the X direction.

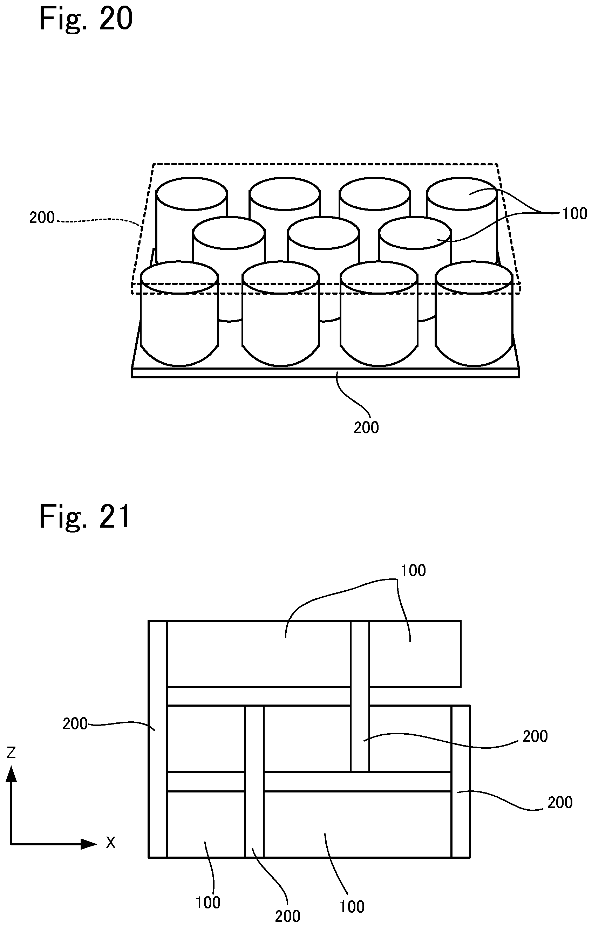

Such a three-dimensional structural body can be produced, for example, by dropping of the rubber composition described above, with the X direction in FIG. 20 facing the up-down direction. That is, as shown in FIG. 20, after forming the plate-shaped coupling portion 200 constituting the lowermost layer, the rubber composition may be laminated thereon so as to form a plurality of shaft members 100. The coupling portion 200 on the second level can be formed by, for example, while adjusting the visocosity, dropping the rubber composition so as to be laminated in a plate shape, or using a nozzle capable of discharging the rubber composition in a flat band shape. By stacking a desired number of shaft members and coupling portions in this manner, the three-dimensional structure can be formed.

Note that the configurations of the shaft members 100 and the coupling portions 200 are not particularly limited. For example, as shown in FIG. 21, the coupling portions can be disposed at desired positions. That is, after stacking a plurality of shaft members having the same length in the X direction as shown in FIGS. 19A and 19B, a coupling portion extending in the Y and Z directions so as to couple all the shaft members may be formed, or a coupling portion may be disposed so as to couple only some of the shaft members. In this case, the lengths of the shaft members can be made different, rather than being the same.

The coupling portions 200 may not necessarily be provided at opposite ends in the X direction, as long as they are disposed such that adjacent shaft members 100 are coupled at any position. Furthermore, the cross-sectional shape of the shaft member 100 is not particularly limited, and it is possible to adopt various shapes such as a cross-sectionally polygonal or oval shape. The distance between the adjacent shaft members 100 can be changed as appropriate, and some of the shaft members 100 can be brought into contact with each other.

### <5-4>

Although the nozzle 82 is moved relative to the table 81 when producing the three-dimensional structure in the above embodiment, the rubber composition can be laminated while moving the table 81, with the nozzle 82 being fixed. Alternatively, both the nozzle 82 and the table 81 may be moved.

The movement path of the nozzle 82 is not particularly limited, as long as the three-dimensional structure as described above can be formed. For example, the second line 92 may be formed prior to the formation of the first line 91. The lines can be formed by discharging the rubber composition in a single stroke, without separately forming the first line 91 and the second line 92.

The shape of the discharge outlet of the nozzle 82 is not particularly limited, and may be a shape that allows the rubber composition to be applied linearly as described above, or the discharge outlet may be elongated so as to allow the rubber composition to be applied in the form of a film.

### <5-5>

The light such as ultraviolet light can be emitted each time one layer of the rubber composition is formed, or may be emitted each time a plurality of layers of the rubber composition are formed. This also applies to the emission of light other than ultraviolet light. In order to adjust the cured state, it is possible to emit light over a plurality of times, or adjust the light intensity.

### <5-6>

The three-dimensional structure according to the present invention can be used for various applications. In the case of using the three-dimensional structure for the above-described sole portion and the insole of a shoe, for example, the whole of these objects may be formed by the above-described three-dimensional structure, or a part of these objects may be formed by the three-dimensional structure. Then, the three-dimensional structural body described above can be varied in the hardness distribution and the weight distribution, and therefore can form a shock-absorbing body having anisotropy, and can be used as a shoe and an insole, for example. For example, the three-dimensional structural body can impart, to a shoe and an insole, cushioning properties suitable for applications (e.g., marathon) for which a force is to be absorbed perpendicularly to the direction of stress, or applications (e.g., sports with a large acceleration, such as tennis and a 100 m run for which a force is to be absorbed horizontally to the direction of stress.

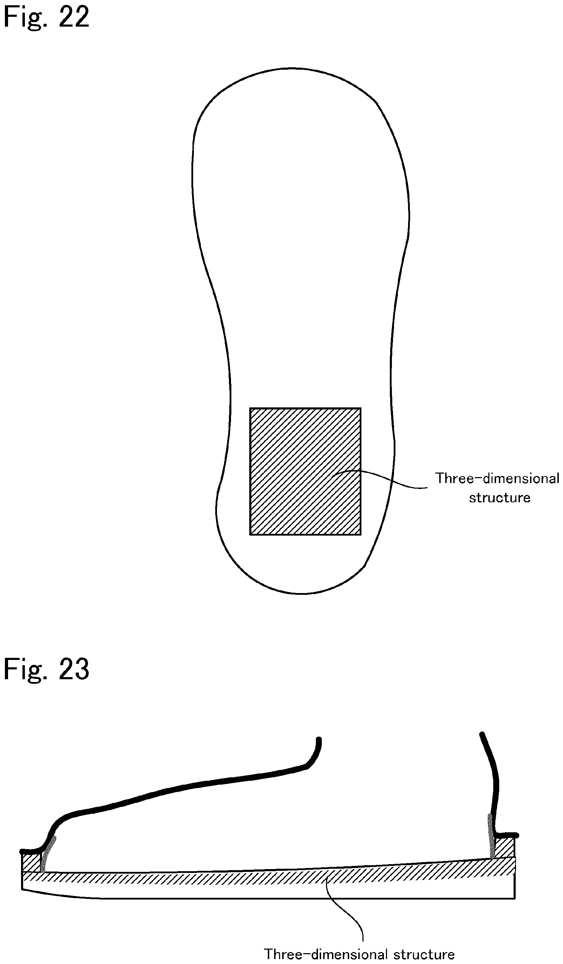

Then, only a part of the sole portion or the insole, for example, a heel part as shown in FIG. 22 can be formed by the three-dimensional structure. Alternatively, as shown in FIG. 23, the sole portion or the insole can be formed by a plurality of layers, and some of the layers can be formed by the three-dimensional structure. In the case of forming the whole of the sole portion or the insole by the three-dimensional structure, the number of partition portions can be adjusted for each region so as to be appropriately changed according to the application: The number of partition portions is decreased when the cushioning properties are to be increased, and the number of the partition portions is increased when the cushioning properties are to be reduced.

### <5-7>

The orientations of use and production of each of the three-dimensional structural bodies are not limited to those described above, and can be appropriately changed according to the application. Therefore, although the X, Y, and Z directions are defined in the present invention, the Z direction may not necessarily be the vertical direction, for example. As long as the X, Y, and Z directions are oriented so as to be orthogonal to each other, how these directions are arranged will not affect the present invention.

### List of Reference Numerals

- 10: Body portion

- 100: Shaft member
- 41, 51: Partition portion
- 200: Coupling portion

## Claims

1. A three-dimensional structure defined by X, Y, and Z directions, comprising:
a body portion in which a plurality of through holes extending in the X direction are disposed in alignment in at least one of the Y and Z directions; and
a partition portion that is provided in at least one of the through holes and that partitions the through hole in at least one location in an axial direction of the through hole, wherein
the three-dimensional structure is formed by a rubber composition.

2. The three-dimensional structure according to claim 1, wherein
the partition portion is provided in a plurality of the through holes, and
the partition portions provided in adjacent ones of the through holes are provided so as to be adjacent to each other.

3. The three-dimensional structure according to claim 2, wherein
the partition portions are provided in a plurality of locations in an axial direction of a plurality of the through holes, and
the partition portions provided in adjacent ones of the through holes are provided so as to be adjacent to each other.

4. The three-dimensional structure according to claim 3, wherein
intervals between the plurality of partition portions provided in the through holes are uniform.

5. The three-dimensional structure according to claim 3, wherein
intervals between a plurality of partition portions provided in the through holes are different.

6. The three-dimensional structure according to any one of claims 1 to 5, wherein
a cross section of each of the through holes is formed in a polygonal shape.

7. A three-dimensional structure defined by X, Y, and Z directions, comprising:
a body portion in which a plurality of shaft members extending in the X direction are disposed in alignment in at least one of the Y and Z directions; and
a coupling portion disposed so as to couple any of locations in a clearance between the plurality of shaft members, wherein
the three-dimensional structure is formed by a rubber composition.

8. A method for producing the three-dimensional structure according to any one of claims 1 to 7, wherein
the rubber composition further comprises a co-cross-linking agent.

9. The method for producing the three-dimensional structure according to claim 8, wherein
the rubber composition further comprises a vulcanized rubber.

10. The method for producing the three-dimensional structure according to claim 8 or 9, wherein
the rubber composition further comprises a filler.

11. A shoe comprising:
a sole portion or an insole that is formed at least partially by the three-dimensional structure according to any one of claims 1 to 10.

12. A method for producing a three-dimensional structure defined by X, Y, and Z directions, comprising:
a first step of discharging a rubber composition containing a liquid rubber from a nozzle, while moving the nozzle in the X direction, to form a linear first line, wherein a plurality of the first lines are formed at intervals in the Y direction, and are stacked in the Z direction, thereby forming a three-dimensional body portion having a plurality of through holes extending in the X direction; and
a second step of forming, in the first step, a linear second line while moving the nozzle in the Y direction, wherein the second line is stacked in the Z direction, thereby forming, in at least one of the through holes, a partition portion that partitions an internal space of the through hole, wherein
the first and second steps include,
after discharging the rubber composition to form each of the first and second lines, a step of curing the first and second lines.

13. The method for producing the three-dimensional structure according to claim 12, wherein,
in a location where the first line and the second line intersect, the second line is formed by discharging the rubber composition from the nozzle, with the nozzle being brought into proximity to the first line.

14. A method for producing a three-dimensional structure defined by X, Y, and Z directions, comprising:
a step of discharging a rubber composition containing a liquid rubber from a nozzle, while laying down successively the rubber composition in the X direction, to form a plurality of shaft members extending in the X direction; and
a second step of forming, in the first step, a coupling portion that couples at least a part of adjacent shaft members, while moving the nozzle in the Y direction or the Z direction, wherein
the first and second steps include,
after discharging the rubber composition, a step of curing the rubber composition.
